(19) Europäisches Patentamt
European Patent Office
Office européen des brevets

(11) **EP 2 743 876 A1**

(12) **EUROPEAN PATENT APPLICATION**

(43) Date of publication:
**18.06.2014 Bulletin 2014/25**

(51) Int Cl.:
***G06Q 30/02*** *(2012.01)*

(21) Application number: **13171812.4**

(22) Date of filing: **13.06.2013**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **11.12.2012 US 201213711499**

(71) Applicant: **Linkedin Corporation Mountain View, California 94043 (US)**

(72) Inventors:
• **Dubey, Sanjay S**
  **Mountain View, CA 94043 (US)**
• **Wei, Kai**
  **Mountain View, CA 94043 (US)**
• **Zhang, Liang**
  **Mountain View, CA 94043 (US)**
• **Lihong, Pei**
  **Mountain View, CA 94043 (US)**
• **Agarwal, Deepak**
  **Mountain View, CA 94043 (US)**

(74) Representative: **Davies, Simon Robert D Young & Co LLP 120 Holborn London, EC1N 2DY (GB)**

(54) **System and method for serving electronic content**

(57) A system and methods are provided for serving content in response to content queries or requests. When a request is received, for content to be presented to a specified user, candidate content items are identified, possibly based on matches between attributes of the user and attributes of the items' target audiences. For each item, a history indicating the frequency (e.g., total number) and/or recency with which impressions of the candidate item were previously presented to the user is retrieved and used to determine a modifier value, which is applied to a calculated or generated probable click-through-rate (pCTR) to produce a modified probability that the user would act on the item if it is served to him or her. Each item's estimated value is computed by multiplying a bid associated with the item and the modified probability; the results are ranked and the top-ranked item(s) are served.

FIG. 1

## Description

### Field of the Invention

This invention relates to computer systems and data processing. In particular, a system and methods are provided for serving electronic content items.

### Background of the Invention

Many types of electronic content are served and presented to users of communication and computing devices such as smart phones, laptop computers, desktop computers, etc. The content may include images, video, audio, text, graphics and so on.

Depending on the application that is operated by the user and to/for which the content is served, such as a web browser, the content may include an entire page or screen of content (e.g., a web page) or just one or more components of a page or screen. Such components may include discrete content items such as advertisements, news articles, status updates of friends or associates of the user, announcements issued by a provider of the application or of a web site visited by the user, etc.

Unfortunately, some existing systems for serving content to users may present a single content item to one user multiple times, to the point that it becomes annoying and the user ignores it and any message it conveys. These types of systems may make no attempt to avoid over-exposure of a given content item.

On the other hand, however, a user may be less likely to act on a particular content item (e.g., by requesting more information, by viewing a larger or better version of the item) until he or she has seen or experienced it multiple times. For this reason, some other systems adhere to an "all-or-none" principle. These systems may stop serving a particular item to a given user after it is served to that user some threshold number of times, but then resume serving the item after some period of time. Thus, for some period of time, the item is completely barred from being served to the user, even if it is the most relevant item for the user and/or would generate the most revenue for the system.

### Summary

Aspects of the present invention are set out in the claims.

In some embodiments, a system and methods are provided for controlling the serving of electronic content items for presentation to a particular user, such that a single content item is preferably served a sufficient number of times to elicit some user action, but not so often or frequently that the user becomes annoyed with it. The system may comprise a social networking service, a web server, a portal and/or some other type of service that serves content, and the content served from the system may be of one or more types (e.g., advertisements, résumés, status updates, job listings).

In these embodiments, the serving of content may be considered probabilistic in nature, in that content items considered for serving for presentation to a user are ranked based in part on probabilities that the user (or a generic user) will act on the content items. More specifically, probabilities that the items would be acted on (e.g., clicked on, selected, investigated), if served, are used in the calculation of estimated revenues to be earned by serving the items, and the items are ranked based on those estimated revenues. The highest ranked item(s) may then be served.

In some implementations, a user data store is maintained to record serving activity of the system. For example, the system may record, for each user and for each serving of content to the user (or for presentation to the user), which content item was served and when it was served. Thus, the system is able to track how many times any content item was served or presented to any user, when it was most recently served, etc. Each serving or presentation of a content item for a user may be considered an "impression."

Base probabilities that a given user may act on particular content items may be calculated from stored data with varying degrees of granularity. For example, by considering all tracking data, encompassing all action on all content items by all users, a generic probability may be calculated that can be applied to any user and any content item.

As one alternative, users may be categorized into various segments or groups based on one or more attributes they have in common. Then, a probability that a generic user will act on a certain content item can be determined, based on actions by other users that are in the same group(s) as the generic user. As another alternative, instead of users, content items may be characterized based on one or more attributes they have in common (or based on common attributes of their target audiences), and data relating to each group of items can be analyzed to determine probabilities that a generic user will act on a content item belonging to a group, based on actions of that user on other items in the group (and/or actions of other users belonging to the same user group(s)). As yet another alternative, a base probability may be calculated by a third party and used by the system.

In some embodiments, a base probability of a given user acting on a particular content item is modified to reflect the given user's context or history with that item (e.g., how often it has been served or presented to him, how recently it has been served or presented to him). In particular, a base probability may be modified a little or a lot, depending on how many times the item was previously presented to him (and, therefore, which ordinal impression the next presentation would be).

Values for modifying base probabilities are derived through additional analysis of data recorded during system operation. More specifically, when a user acts on a content item the system records which ordinal impression of the content item to the user elicited the action (e.g., 3$^{rd}$, 6$^{th}$). Over time, it may be observed that users that act on a content item usually do so within some range of impressions, such as between the 4$^{th}$ and the 7$^{th}$ impression, for example.

Data regarding users' reactions to different impressions of content items are analyzed to determine corresponding weights or modifiers for each of multiple ordinal impressions. An ordinal impression's weight or modifier proportionally reflects users' actions in response to that impression as opposed to other impressions. Thus, in the example above, modifiers for impressions 4 through 7 would be higher than modifiers for impressions before number 4 and after number 7.

As with base probabilities, these modifiers may be different for different groups/types of users and/or content items. Specifically, different probability modifiers may be derived for different types of content items (e.g., based on their attributes and/or attributes of their target audiences) and/or different types of users (e.g., based on their attributes), as well as for different ordinal impressions, different times of day, different manners of presentation of the content item (e.g., on a smart phone, on a computer, location of the content impression within a page of content) and/or other factors.

**Brief Description of the Drawings**

The present invention will be described further, by way of example only, with reference to preferred embodiments thereof as illustrated in the accompanying drawings, in which:

> FIG. 1 is a block diagram depicting a system for serving electronic content, in accordance with some embodiments of the invention.
> FIG. 2 is a flow chart illustrating a method of serving electronic content, in accordance with some embodiments of the invention.
> FIG. 3A is a graph demonstrating an illustrative historical record of user actions on impressions of content items.
> FIG. 3B is the graph of FIG. 3A indicating probability multipliers that may be associated with different ordinal impressions of a content item, according to some embodiments of the invention.
> FIG. 4 is a diagram of a data structure for determining a probability modifier, in accordance with some embodiments of the invention.
> FIG. 5 is a diagram of a system for serving electronic content, according to some embodiments of the invention.

**Detailed Description**

The following description is presented to enable any person skilled in the art to make and use the invention. Various modifications to the disclosed embodiments will be readily apparent to those skilled in the art, and the general principles defined herein may be applied to other embodiments and applications without departing from the scope of the present invention. Thus, the present invention is not intended to be limited to the embodiments shown.

In some embodiments of the invention, a system and method are provided for serving electronic content. The content may be any type of electronic data formatted for presentation via a web browser or some other application program or user interface. The content may include complete compositions presented individually, such as web pages, documents or videos, or may be components that can be presented as part of a web page or other composition, such as advertisements, job listings, notifications, status updates, news, documents, sports information, images, videos and so on. In short, electronic content items that are served in embodiments of the invention may include any type of content that can be presented to a user on a communications or computing device.

Although a "content item" may refer to a discrete component or composition of content in some embodiments, in other embodiments it may refer to a collection of components or compositions. In particular, one type of content item is a "campaign" associated with a product, a service, a person, an organization or other thing. A campaign may encompass multiple graphics, videos, textual compilations or other entities that may, in and of themselves, be deemed "content items."

As used herein, the term "impression" may refer to any serving or presentation of a content item. Thus, an impression of a given content item may refer to the serving of that content item (e.g., to a web browser, to another application) in response to a request for content (or a content query) and/or the resulting presentation of that content item to a user (e.g., by the web browser or other application).

Embodiments of the invention may be implemented as part of virtually any online system or service that serves data, whether it is a social network service, a web server, a portal site, a search engine, etc.

**Introduction**

In a system described herein that serves electronic content to users and/or for presentation to users, some information about a target user to whom a content item is to be served or presented is received at the system as part of a query or request for content. For example, when a user of a social network service connects to the service's site and navigates to a particular page, a web browser or other display engine generates a query to a data server operated by the site, to identify and/or obtain content to present to the user. The content query may include or be accompanied by one or more attributes or characteristics of the user (e.g., gender, age, location, employment status).

Similarly, content items that have been stored and that are to be served to users of the system may have associated attributes that identify target audiences of the content items. For example, an advertisement designed to promote sales of a particular product, a job listing describing a new job opening, or some other item, may be received with information identifying types of users to whom the item should be presented (e.g., gender, age, location, employment status).

In response to a query or request for content for a particular user, the system searches for appropriate content, by comparing known attributes of the user to recorded attributes of the target audiences of the stored content items. One or more appropriate content items are identified and served for presentation to the user.

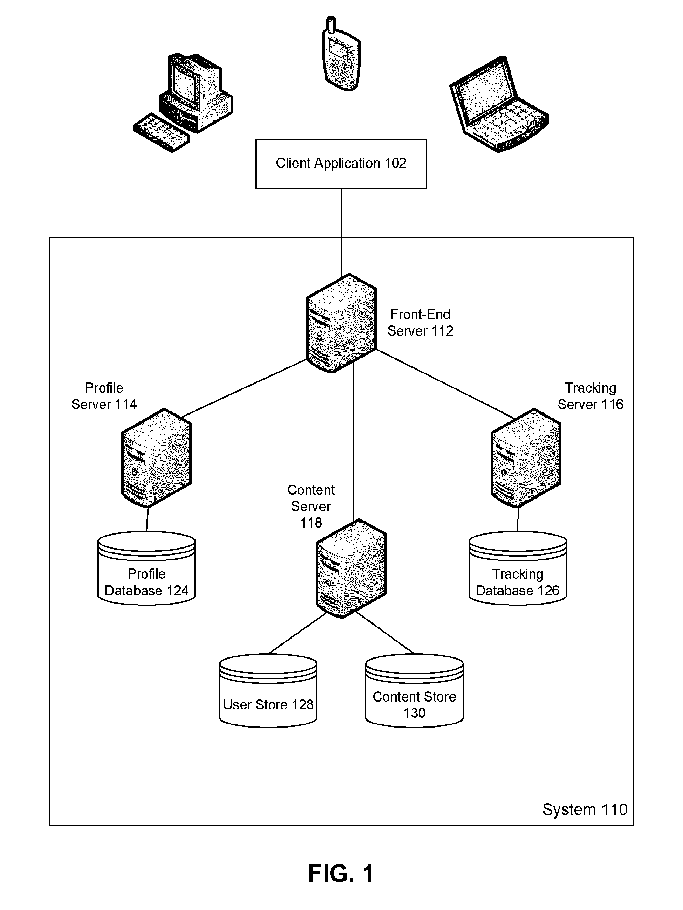

FIG. 1 is a block diagram of a system for serving content, according to some embodiments of the invention. In these embodiments, requests for content are received at front-end server 112, which may comprise a web server, application server, data server and/or other software modules for serving content items in response to requests. System 110 also includes profile server 114, tracking server 116, content server 118, profile database 124, tracking database(s) 126, user data store 128 and content store 130.

System 110 may host a social networking service, a portal site, a search engine or some other service, which a user accesses via client software application 102. As part of the service, the system serves content for presentation to users via the client application. Client application 102 may be or may comprise a web browser or other application program capable of presenting content items to a user, and may execute on a portable or stationary computing or communication device operated by a user.

Profile server 114 maintains profiles, in profile database 124, of users or members of a service hosted by system 110. A user's profile may reflect any number of attributes or characteristics of the user, including personal (e.g., gender, age range), professional (e.g., job title, employer), social (e.g., organizations the user is a member of, geographic area of residence), education (e.g., degree, university attended), etc.

When a service connection or content request is received at front-end server 112 from or on behalf of a user, the system retrieves some or all data constituting the user's profile from the profile server. The profile data may be shared throughout system 110 to accompany various actions or communications, such as when content is requested from content server 118, when a record of activity is stored at tracking server 116 and/or user store 128, and so on.

Tracking server 116 monitors and records activity of system 110 (e.g., in tracking database(s) 126). For example, whenever content is served from front-end server 112 (e.g., to a client software), the tracking server records what is served, to whom (e.g., which user), and when. Similarly, the tracking server also records user actions regarding content items presented to the users (e.g., clicks, follow-on requests), to include identities of the user and the content item acted on, what action was taken, etc.

Content server 118 maintains one or more repositories of content items for serving to users (e.g., content store 130), an index of the content items, and user store 128. An illustrative means for indexing content items to facilitate their selection and serving to users is described in U.S. Patent Application No. 13/705,115, which is entitled "Apparatus and Method for Indexing Electronic Content" and is incorporated herein by reference.

User store 128 stores, for each user of system 110, a record of content items served to the user, or served for presentation to the user, and when they were served. In particular, user store 128 may be configured to allow the content server (and/or other components of system 110) to quickly determine how many previous impressions of a given content item were presented to a given user, when they were presented, how they were presented (e.g., how prominently or where they were presented within a web page or other page of content), and/or other information. Although some of this data may duplicate what is stored by tracking server 116, contents of user store 128 are rapidly accessible to the content server, and may be used (as described below) to help select content items to serve in response to a current content request.

When content is stored at content server 118, it may be stored with attributes, indications, characteristics and/or other information describing one or more target audiences of the content. For example, a provider of an advertisement to be served to users may identify relevant demographic attribute and desired values of target users, a provider of a job listing may identify characteristics of users that should be informed of the opening, and so on.

System 110 may include other components not illustrated in FIG. 1, such as an index of the content maintained by content server 118, an analysis module operating on tracking server 116 (and/or elsewhere) to analyze stored data, and/or other components. Also, in other embodiments of the invention, functionality of a system for serving electronic content as described herein may be distributed differently.

For example, the functionality may be distributed among the illustrated components in an alternative manner, such as by merging or further dividing functions of one or more components, or may be distributed among a different collection of components. Yet further, while implemented as separate hardware components (e.g., computer servers) in FIG. 1, components such as front-end server 112, profile server 114, tracking server 116 and content server 118 may alternatively be implemented as separate software modules executing on one or more computer servers.

## Managing the Serving of a Single Content Item to One User

In some embodiments of the invention, a system such as system 110 of FIG. 1 serves electronic content to users or for presentation to users. The system may serve the content directly to a user-operated device executing a suitable client application (e.g., a web browser), for example, or may serve the content to an intermediate entity that then presents the content to the user.

In either scenario, when the system receives a request or query for content to be presented to a user, the system receives (or retrieves) an identity and/or a set of attributes of the user for use in selecting appropriate content. For example, the user may first login to system 110 (e.g., via front-end server 112) before requests are issued for content for the user. In this case, the requests identify the user by name, user identifier or some other indicia understood by the system.

As one alternative, a token may be stored on the user's communication or computing device and may be delivered to the system with a content request or query. Such a token may identify the user in some way (e.g., with a user identifier assigned by or known to system 110). As another alternative, when a request or query for content for presentation to the user is received at system 110, it may be accompanied by a set of attributes of the user (e.g., age range, gender, location).

In some embodiments of the invention, a system for serving content is operated in a manner that attempts to avoid serving the same content item to the same user on such a frequent basis that the user develops a negative opinion of the item, a subject or feature of the item, and/or a provider or sponsor of the item. In these embodiments, the system serves sponsored content for presentation to users - content that a provider pays to have served - and a goal is to have a sponsored content item served often enough to elicit a response from a user, but not so often that the user develops an aversion to it.

With reference to system 110 of FIG. 1, content items are stored within a repository such as content store 130 of FIG. 1, and are indexed by a content server such as server 118. Details of serving activity, such as which content item is served to which user at which time, are stored in a repository such as user store 128, tracking database 126 and/or elsewhere.

Users' behavior regarding content items served/presented to them is also recorded. A user's behavior may include clicking on a content item, requesting more information regarding a subject of the content item, requesting re-presentation of the item, and/or other activity that reflects an interest in the content item, a theme or subject of the content item or a provider of the item.

Thus, the system maintains historical data regarding how often and when a particular content item was served, to whom it was served, and what action a user that received the content item did in response. For example, if a user acts on a content item, the system may record that action, which content item was acted upon, which impression of the content item resulted in the action (e.g., 1st, 4th, 7th), and/or other details.

The system may not only record what content items were served to a user in response to a particular request, but may also record where/how they were presented to the user. In particular, content items served by the system may be presented at specific locations within pages of content navigated by a user or otherwise displayed to the user. Those locations may be identified in the content requests, in which case the system may note where each item is presented.

Presentation locations may illustratively comprise x/y coordinates or relative positions/orientations within a page, such as "top" (e.g., at the top of the page), "right margin," "lower left" and so on. The coordinates, general locations, ratings of the locations (e.g., indicating their relative values or desirability) and/or other indicia of the content item locations may be used to determine a prominence with which a content item is presented, the likelihood that a user will see the content item, and/or other factors.

For example, a content item presented in a large, rectangular, banner-type slot at the top of a page is more prominent and therefore more likely to be observed and viewed by a user (and can be more easily acted on) than another content item presented in a small, square slot at the lower right-hand margin of the page. As will be discussed below, the prominence with which a content item is presented to a user may be considered when determining whether the user is likely to act upon the content item (e.g., by clicking on it) or whether the user may be becoming fatigued by the content item.

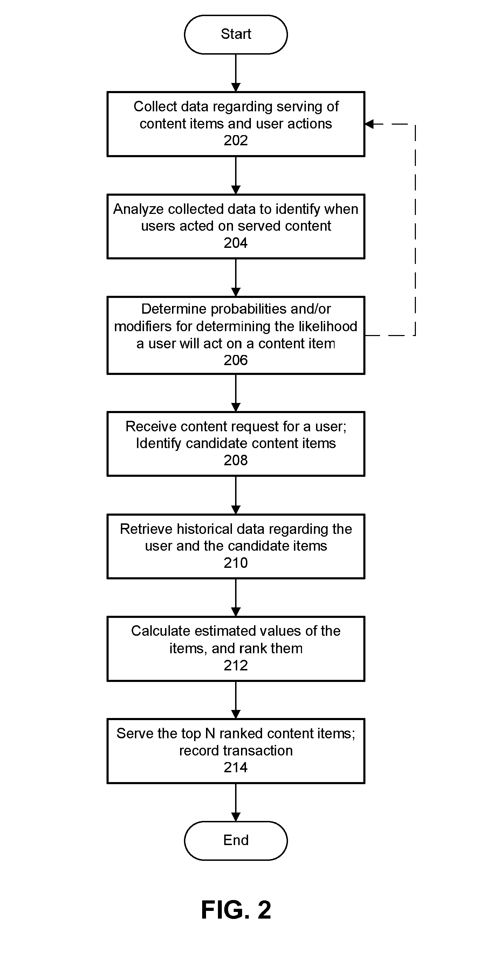

FIG. 2 is a flow chart demonstrating a method of serving electronic content to a user, according to some embodiments of the invention. In this method, multiple content items considered for serving in response to a content request are ranked according to their estimated/expected values or revenues.

The estimated values may be calculated in part on a probability or probabilities that the user or a generic that will receive the content item(s) would act upon the item(s) (e.g., by clicking on them). Such a probability may be modified based on the number of, and/or recency with which, previous impressions of the content item(s) were served to the user.

In operation 202, data are collected over time regarding the serving of multiple content items to multiple users. As indicated above, each serving of each content item may be recorded, along with a time/date of the serving, a location at which the item was presented (e.g., a position within a page of content), the user to whom the content item was presented, and any action taken by the user regarding the item.

Data may continue to be collected during execution of the illustrated method and afterward. In particular, the data may be continually updated as content items continue to be served by the content-serving system and as new content items are received and stored for serving.

In operation 204, collected data are analyzed to determine when users have historically acted upon or been most receptive to the content items that were served. Different analyses or operations may be performed in different embodiments of the invention.

In one analysis, for each user click on an impression of a content item (or some other user action), it is determined which ordinal presentation of that content item to that user resulted in the action (e.g., 3rd impression, 5th impression). This may be repeated for any number of content items or all of them.

The results may be graphed or otherwise aggregated. In an illustrative graph, ordinal numbers of impressions of content items may comprise one axis (e.g., the x-axis), while the other axis (e.g., the y-axis) represents numbers of users who acted on a content item. As one alternative, instead of absolute numbers of users, the other axis may represent, out of all users who acted on a content item, percentages of those users who acted upon a particular ordinal impression of the content item.

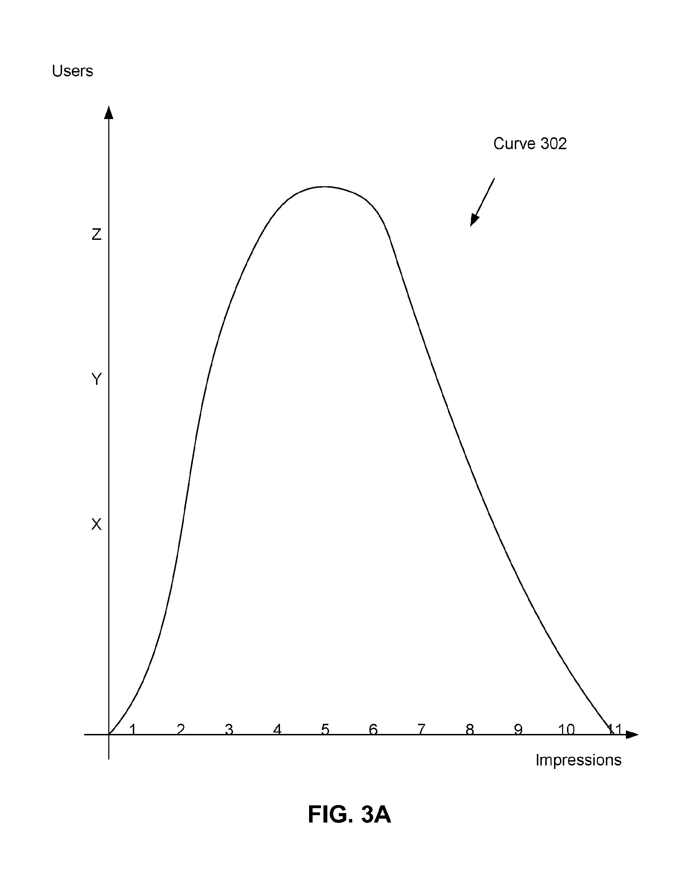

FIG. 3A demonstrates such a graph, wherein all content items that were acted on received such action between 1 and 11 impressions. X, Y and Z may represent numbers or percentages of users that took action at particular ordinal impressions of the items. In this illustrative curve, most users acted on content items between the 4th and the 6th presentations of the item to the user.

In different embodiments of the invention, and as introduced above, data for different combinations of users and/or content items may be graphed and/or analyzed separately. For example, the graph of FIG. 3A may encompass actions on all content items served by the content-serving system, to all users, over some period of time. As one alternative, the data used to generate a graph may encompass just content items that have one or more common attributes or that have target audiences that share one or more common attributes. As another alternative, data that are analyzed or graphed may relate to just a subset of all users (e.g., a group of users having one or more common attributes).

Returning to FIG. 2, in operation 206, results of the data analysis of operation 204, and/or other analyses, are used to determine a probability that a generic user could be expected to act upon a content item, based on historical actions of some (or all) users regarding some (or all) content items presented to them. In other words, based on how and when users in the past acted on content items, the likelihood that some other user would act upon a content item may be estimated or calculated.

This probability may be termed pCTR for probable (or predicted) Click-Through-Rate. In some embodiments of the invention, different pCTR values are calculated for different types or groups of users.

In particular, for users matching one set of attributes (e.g., between 26 and 30, male, working as software engineers), one probability may be calculated indicating their likelihood of acting on a content item having a particular set of attributes (e.g., target audience attributes). The probability may be calculated by considering out of all users having the first set of attributes that were presented a content item having the particular set of attributes, how many of the users acted on the content item. This type of calculation may be performed for any number of groups/classifications of users and for any number of groups/classifications of content items.

Also, however, in operation 206 a probability modifier is generated to modify a pCTR to account for the frequency (and/or recency) with which impressions of a particular content item were presented to a particular user. In the graph of FIG. 3A, for example, for the content items and user actions that produced the graph, most user activity happened between the 4th and 6th impression of a content item. Therefore, a highest or normalized likelihood (e.g., 1) may be assigned to the 4th, 5th and 6th impressions of one content item to one user. Lower probabilities may be assigned to other ordinal impressions.

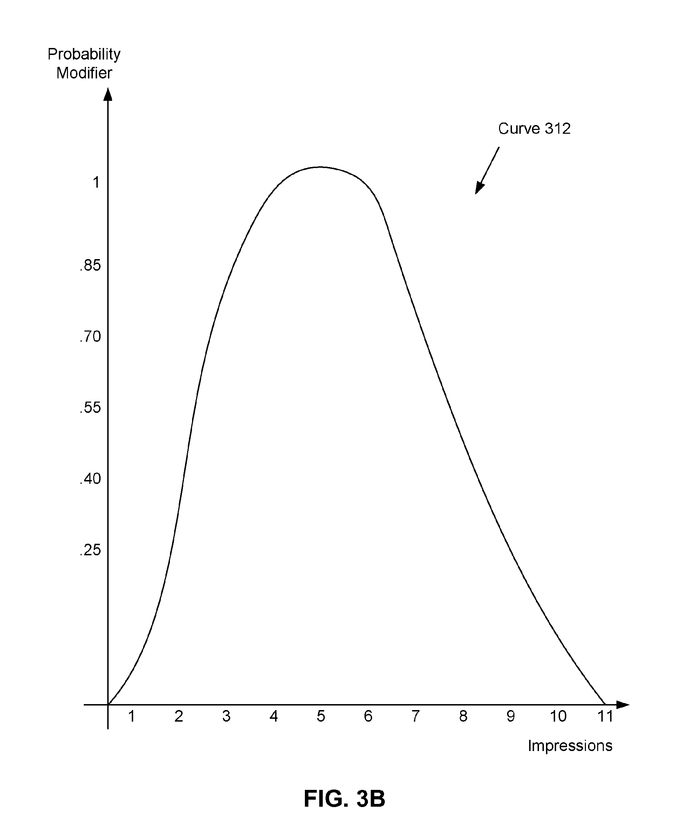

Generation of probability modifiers is illustrated in FIG. 3B, which reproduces the curve of FIG. 3A. However, the quantities or percentages of users that populated the y-axis in curve 302 have been mapped to probability modifiers that can be used to modify pCTR values. Each probability modifier may be proportional to the corresponding quantity (or percentage) of users graphed in curve 302. As described below, these modifiers may be used to modify estimated values or revenues of different content items, thereby altering their rankings and possibly determining which content items are selected for serving in response to a particular content request.

As seen in FIG. 3B, probability modifiers used in associated embodiments of the invention may be normalized to fall between 0 and 1. For example, while modifiers between the 4th and 6th impressions of a content item may be at the maximum possible value, a modifier corresponding to the 2nd impression may be calculated as 0.40, while a modifier of 0.70 may be associated with the 7th impression, and so on.

In FIG. 2, the dashed line returning to operation 202 from operation 206 reflects the ongoing nature of the data collection and analysis. In some embodiments of the invention, such activity may occur continually or regularly. For example, data may be collected whenever content items are served. Analysis logic may then execute periodically to analyze the data, update action likelihoods, calculate new or updated probabilities (or pCTRs) for different collections of content items and/or users, derive new or updated probability modifiers, test one or more modifiers during live operation of the content-serving system, etc.

In operation 208 of the method of FIG. 2, a new content request or query is received, for one or more content items to be presented to a specified user. The system may retrieve or receive a profile or set of attributes associated with the user.

In response to the request, the specified user's attributes and/or other information (e.g., attributes identifying target audiences of stored content items) are used to identify multiple candidate content items that could be served in response to the request.

Illustratively, attributes of target audiences of content items available for serving by the system may be compared to attributes of the specified user. Depending on how specific or narrow the attributes are, any number of candidate content items considered suitable for the user may be identified.

In operation 210, for some or all of the candidate content items, information indicating how many times each candidate content item has previously been served for presentation to the user is retrieved, such as from user store 128 of system 110 of FIG. 1. This information may cover all impressions served or presented to the user, or just impressions that occurred within some period of time (e.g., the last 30 days, the last 90 days).

In operation 212, estimated values or revenues of the candidate content items are calculated, and the items are ranked according to those values. Content items' estimated values, or revenues, may be calculated differently in different implementations, but will apply modified probabilities of user action as described above.

In some embodiments of the invention, a content item's estimated value V is calculated as

$$V = bid * pCTR * modifier$$

In some embodiments, a content item's "bid" is the amount that a sponsor or provider of the item will pay to the content-serving system (or an operator of the system) in return for serving/presenting the content item. The bid may be based on CPC (cost-per-click), CPM (cost-per-mil) or some other measure, which may require monitoring after the content is served (e.g., to determine whether the user clicked on it).

As described previously, a content item's pCTR is its probable or predicted click-through-rate, which may be defined as a simplistic probability that the user to whom the content item is presented will act on it. The pCTR value may be generated within or outside of the content-serving system, and may be calculated simply by determining a ratio (or percentage) of (a) users that acted on the content item to (b) all users to whom the content item was presented. In some implementations, only the actions of users that are similar to the target user of the current query (i.e., the specified user) may be considered in calculating or determining a pCTR, or when retrieving a stored pCTR, and/or only actions on content items similar to the candidate content item currently being valued.

One user may be considered similar to another if they share a threshold number of common attributes (e.g., age ranges, job titles, gender). Similarly, one content item may be considered similar to another if they (or their target audiences) share a threshold number of common attributes. Thus, in these implementations, when pCTRs are needed for calculating estimated values of candidate content items, the pCTRs may (or may not) be specific a particular groups or types of users and/or content items.

For example, if 1.3% of all users between the ages of 21 and 25 to whom an advertisement for a vacation package has been presented have clicked on the ad (or an announcement of a job opening for a reporter, or some other item), the corresponding pCTR (e.g., 0.013) may be used to calculate the estimated value of that item (and/or similar items) whenever it is a candidate to be served to a user having that attribute, even if the current user has seen the ad fifty times.

It may be noted that one problem with a pCTR is that it may be calculated without regard to how recently and/or frequently the target user was served an impression of the content item. In particular, the same pCTR may be used if the specified user has never received an impression of a particular content item before, or if he has received 30 impressions of the same content item in the last 2 hours.

Finally, the "modifier" for calculating a content item's estimated value is a probability modifier described above, which serves to modify or adjust the pCTR (and the estimated value) to account for how many times and/or how recently the content item has been presented to the specified user. The range of values of probability modifiers may vary from one implementation to another, such as 0.0 to 1.0, as shown in FIG. 3B, 0.1 to 2.0, etc.

By using a suitable modifier, if the specified user hasn't seen enough impressions yet to take note of the content item (or of something featured in the item), or if has seen so many impressions that they now annoy him, the resulting estimated value will reflect the fact that he is not very likely to act on a new impression, regardless of what the pCTR reports as the probability that the user will take action.

In sum, the probability represented by a pCTR may be derived from a correlation between attributes of a group of users and attributes of a content item considered for serving to a target user (or attributes of a target audience of the item), and may have no personal relation to the target user. In contrast, the proper probability modifier dynamically adjusts the pCTR (and estimated value) based on the user's current context, to account for how frequently (and/or recently) the content item was served to the user.

In an illustrative calculation of a content item's estimated value, the item's bid, such as $16.00 CPC, is multiplied by the appropriate pCTR, such as 0.015 (representing 1.5%), and the appropriate probability modifier, such as 0.9. These values may be dynamically computed or may be retrieved from a content server, content index, content repository, a tracking server, a tracking database or some other component. Any or all of them may reside in memory to avoid the delay in retrieving them from permanent storage.

The estimated value V = $16.00 * .0015 * 0.9 = $0.0216 (or 2.16¢). Thus, by modifying the content item's pCTR with the probability modifier according to the illustrated embodiment of the invention, a more realistic probability that the user will act on a new impression of the item is determined, and a more accurate estimated value can be derived.

In operation 214, after the candidate content items have been ranked according to their estimated values/revenues, the top N items are served in response to the content request, where N may be determined by the number of items requested to be served.

After operation 214, the illustrated method ends.

In the method of FIG. 2, all impressions of one content item to a given user may be considered equal, regardless of how prominently the impressions were presented. For example, the illustrated method of serving a content item may consider presentation of an impression placed at the top of a page of content to be equally significant as presentation of an impression at the bottom of the page.

In methods of serving a content item according to other embodiments of the invention, impressions of a content item may be weighted differently based on the prominence of the impression and/or other factors, such as size, permanence (e.g., how long it is presented), color, behavior, the application or service that presented the page, etc.

In one implementation, presentation of a content item in the most prominent location of a page may be treated as a single impression, while presentations of the content item in less prominent locations may be treated as less than a full impression. For example, a banner location at the top of a page may equate to 1 impression, while an impression at the right-hand edge may be treated as 0.75 impression or 0.5 impression depending on whether it is closer to the top or bottom of the page, and an impression at the bottom of the page (which possibly is seen only if the user scrolls the page down), may be treated as .25 impression. In other implementations, weights may be assigned using some other scheme, such as awarding a value of 1 to impressions placed in the least prominent position and awarding to impressions in other positions values that are integer or decimal multiples of 1.

These weights may be applied or employed when assembling historical data, when analyzing the data, when calculating probability modifiers and/or when calculating estimated values of content items that are candidates for serving to a user.

For example, when collecting historical data regarding user actions on content item impressions, and/or determining probability modifiers, weights may be applied such that the N$^{th}$ time a particular content item is presented to a particular user only counts as the M$^{th}$ time (M < N), because some of the impressions were not in the most prominent location of a page. In one implementation, each presentation of a content item may be represented by the weight corresponding to the position in which it was presented (e.g., 1, 0.75, 0.25). In this implementation, multiple presentations may therefore be required before the 1$^{st}$ ordinal impression (or other ordinal impression) is counted.

Similarly, and as discussed above, when calculating one candidate content item's estimated value, in order to rank it for possible serving to a specified user, previous presentations of the item to the user are used to consider the current context and to calculate or determine a probability modifier. Some or all of those previous impressions may be weighted. Thus, if four impressions had been presented, all at the top of pages of content, they may count as four full impressions and a probability multiplier corresponding to the 4$^{th}$ ordinal impression may be read from a graph or from other stored data. However, if all four had been presented at the bottom of the pages, at locations having weights of 0.25, then the four impressions together may only count as one impression, and the modifier corresponding to the 1$^{st}$ ordinal impression may be applied.

In some embodiments of the invention, probability modifiers are stored in a matrix, array or other data structure for easy retrieval, and may be derived from the frequency and/or recency of presentation of a set of content items - e.g., the total number of impressions presented, and how recently it was last presented. The data structure may be retained in memory to expedite the process of valuing content items and ranking them for selection in response to a content request, and may be continually or regularly updated as tracking data are collected and analyzed.

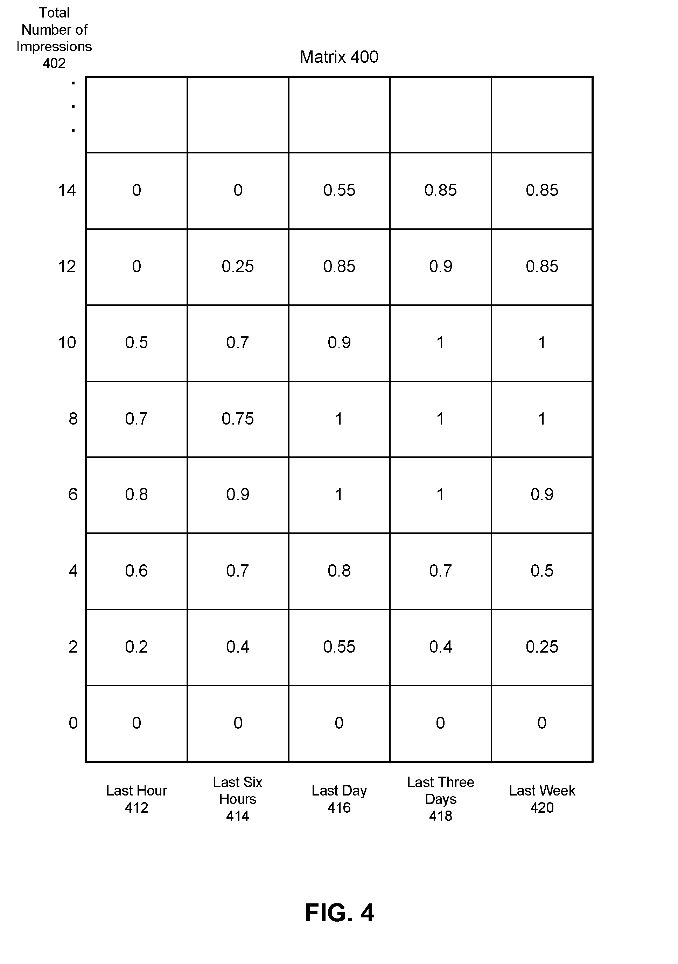

FIG. 4 illustrates a matrix used to store probability modifiers according to some embodiments of the invention. The modifiers may be used, as in the method of FIG. 2, to modify pCTRs and thereby also modify the estimated values or revenues of content items when they are considered for serving in response to a content request.

For example, after a request for content for a specified user is received, and when each candidate content item is being evaluated for serving in response to the request, the "modifier" for the estimated value equation above may be read directly from the table and applied to a pCTR to give it context.

In matrix 400, one dimension is populated with total numbers of impressions 402 (e.g., 0, 2, 4) presented during a default time period (e.g., 90 days), while the other is populated with multiple time spans 412 - 420 during which a most recent impression was presented. The default time period may match the time period during which tracking data were collected and analyzed in order to yield the probability modifiers, or some other time period (e.g., 30 days, 60 days). The indicated index values may vary from implementation to implementation, and are not limited to those indicated in FIG. 4.

As described above, in some implementations, the data may be derived from all user actions (e.g., clicks) on all content items during the default time period. In other implementations, the data may reflect just action taken by a group of users having a set of common attributes, and/or user actions on content items having a set of common attributes or having target audiences that have a set of common attributes. Yet further, an implementation of the matrix may be narrowed or tailored to capture just one user's experience.

The scope of a probability modifier may therefore differ from the scope of a pCTR that it is used to modify. While the pCTR may apply to a collection of users (and/or content items) having particular attributes, the probability modifier may be derived from a larger (or smaller) set of users and/or a larger (or smaller) set of content items.

In some embodiments of the invention, to retrieve the appropriate probability modifier, the cell is read that corresponds to the total number of previous impressions of the content item presented to that user and to the time-frame in which the most recent impression was served. Thus, if the content item had been served a total of 4 times to the user, with the most recent impression being in the last six hours, the appropriate modifier or action likelihood read from matrix 400 is 0.7.

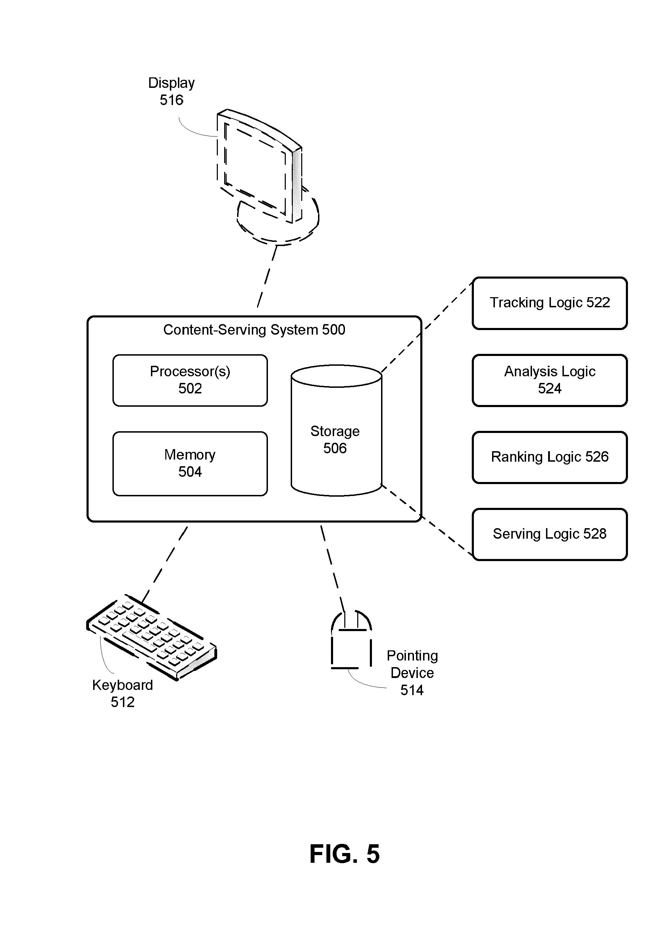

FIG. 5 is a block diagram of a system for serving electronic content, according to some embodiments of the invention.

Content-serving system 500 of FIG. 5 comprises processor(s) 502, memory 504 and storage 506, which may comprise one or more optical and/or magnetic storage components. Content-serving system 500 may be coupled (permanently or transiently) to keyboard 512, pointing device 514 and display 516.

Memory 504 stores probability modifiers, pCTRs, bids, other data, and/or logic manipulated during operation of system 500.

Storage 506 of the content-serving system stores content for serving to/for users, user data, tracking data and/or other information. Storage 506 also stores logic that may be loaded into memory 504 for execution by processor 502. Such logic includes tracking logic 522, analysis logic 524, ranking logic 526 and serving logic 528. In other embodiments of the invention, any or all of these logic modules or other content may be combined or divided to aggregate or separate their functionality as desired.

Tracking logic 522 comprises processor-executable instructions for tracking content requests received at system 500, tracking the serving of content items to users, tracking user actions on or regarding content items, and/or other behavior. Logic 522 may include, be accompanied by, or used to assemble data reflecting users' activity, content providers' activity and/or other aspects of the system.

Analysis logic 524 comprises processor-executable instructions for analyzing user activity, generating probabilities (e.g., pCTRs), probability modifiers and/or other data, and may be used to test newly generated data.

Ranking logic 526 comprises processor-executable instructions for ranking content items being considered for serving in response to a content request. Logic 526 may therefore retrieve content item bids, pCTRs, probability modifiers and/or other values, use them to compute content items' estimated values or revenues, and rank the items by the results.

Serving logic 528 comprises processor-executable instructions for handling and responding to content requests. Serving logic may thus process a new request, search for content items suitable for serving in response and serve the selected (e.g., top-ranking) items.

The environment for the approach described herein may incorporate a general-purpose computer or a special-purpose device such as a hand-held computer or communication device. Details of such devices (e.g., processor, memory, data storage, display) have been omitted for the sake of clarity.

Data structures and program code described in this detailed description are typically stored on a non-transitory computer-readable storage medium, which may be any device or medium that can store code and/or data for use by a computer system. Non-transitory computer-readable storage media includes, but is not limited to, volatile memory, non-volatile memory, magnetic and optical storage devices such as disk drives, magnetic tape, CDs (compact discs), DVDs (digital versatile discs or digital video discs), or other non-transitory computer-readable media now known or later developed.

The methods and processes described in the detailed description can be embodied as code and/or data, which can be stored in a non-transitory computer-readable storage medium as described above. When a processor or computer system reads and executes the code and/or data stored on the medium, the processor or computer system performs the methods and processes embodied as data structures and code and stored within the medium.

Furthermore, the methods and processes described below can be included in hardware modules. For example, the hardware modules may include, but are not limited to, application-specific integrated circuit (ASIC) chips, field-programmable gate arrays (FPGAs) and other programmable-logic devices now known or later developed. When the hardware modules are activated, the hardware modules perform the methods and processes included within the hardware modules.

The foregoing descriptions of embodiments of the invention have been presented for purposes of illustration and description only. They are not intended to be exhaustive or to limit the invention to the forms disclosed. Accordingly, many modifications and variations will be apparent to practitioners skilled in the art. The scope of the invention is defined by the appended claims and their equivalents.

**Clauses**

1. A system for serving electronic content, the system comprising:

a repository of content items for serving in response to requests for content for presentation to users;
a data store comprising, for each of a plurality of users:

for each of the content items that have been served for presentation to the user:

first data identifying a number of times the content item has been served for presentation to the user;

selection logic for identifying a subset of the content items suitable for serving to a first user in response to a request for content to present to the first user; and
estimation logic for calculating, for each of the identified content items, an estimated value of the content item, wherein the estimation logic is configured to combine:

a bid offered by a provider of the content item;
a base probability that the first user will act on the content item if the content item is presented to the first user; and
a modifier reflecting a number of times the content item was previously presented to the first user.

2. The system of clause 1, wherein the data store further comprises, for each of the plurality of users and for each of the content items:

second data identifying a recency with which the content item has been served for presentation to the user.

3. The system of clause 1 or 2, further comprising:

a repository of tracking data identifying, for each of multiple content items, which impressions of the content items resulted in action on the content items by users to whom the impressions were presented.

4. The system of clause 3, further comprising:

analysis logic for analyzing the tracking data to assign to each of multiple ordinal impressions of a given content item a measure between 0 and 1, inclusive, of users that acted on the given content item upon the ordinal impression of the given content item.

5. The system of any preceding clause, wherein the modifier further reflects a recency with which the content item was presented to the first user.

**Claims**

1. A method of serving electronic content items, the method comprising:

receiving a request for at least one content item for presentation to a first user;
for each of a plurality of content items servable in response to the request, calculating an estimated value of the content item, from:

a bid offered for serving the content item; and
a modified probability that the first user will act on the content item if the content item is presented to the first user, wherein the modified probability reflects how many times the content item was previously presented to the first user; and

serving one or more of the plurality of content items in response to the request.

2. The method of claim 1, further comprising:

ranking the plurality of content items based on their estimated values;
wherein said serving comprises serving the top-ranked one or more content items.

3. The method of claim 1 or 2, wherein the modified probability that the first user will act on the content item is calculated from:

a base probability derived from historical data regarding multiple users' actions on the content item; and
a probability modifier, wherein a value of the modifier depends on how many times the content item was previously presented to the first user.

4. The method of claim 3, wherein:

for a number of times N that the content item was previously presented to the first user, the value of said probability modifier is proportional to a quantity of users that acted on a set of content items upon an (N+1)$^{th}$ presentation.

5. The method of claim 1, further comprising calculating the modified probability that the first user will act on the content item by:

identifying, based on historical data, a range of impressions of a set of content items that includes the content item, such that users who acted on an impression of a content item in the set of content items most frequently acted on an impression within the identified range of impressions;
assigning a probability modifier of 1 to impressions within said range; and
assigning probability modifiers between 0 and 1 to impressions outside said range.

6. The method of claim 5, wherein said calculating the modified probability that the first user will act on the content item further comprises:

identifying a quantity of previous impressions N of the content item presented to the first user; and
retrieving a probability modifier assigned to the (N+1)$^{th}$ impression.

7. The method of claim 1, further comprising calculating the modified probability that the first user will act on the content item by:

mapping, for each of multiple ordinal impressions of a set of content items that includes the content item and that were acted on by users, a corresponding representation of a number of users that acted on a given content item in the set of content items upon the ordinal impression of the given content item; and
for each of the multiple ordinal impressions, normalizing the representation to produce a probability modifier proportional to the number of users and having a value between 0 and 1, inclusive.

8. The method of claim 7, wherein said calculating the modified probability that the first user will act on the content item further comprises:

identifying a quantity of previous impressions N of the content item presented to the first user; and
retrieving a probability modifier associated with the (N+1)$^{th}$ impression.

9. The method of any preceding claim, wherein said calculating an estimated value of the content item comprises multiplying:

the bid offered by a provider of the content item for serving the content item;
a base probability that the first user will act on the content item; and
a probability modifier configured to reduce the base probability if:

the number of times the content item was previously presented to the first user is less than a first threshold; or
the number times the content item was previously presented to the first user is greater than a second threshold.

10. The method of claim 9, wherein the probability modifier further modifies the based probability based on a recency with which the content item has been presented to the first user.

11. The method of any preceding claim, further comprising:

with the request, receiving indications of locations at which the one or more content items are to be presented to the first user within a page of content;
wherein the different locations are assigned different weights proportional to their prominence within the page.

12. The method of any preceding claim, further comprising, prior to receiving the request:

serving a plurality of content items for presentation to multiple users;
for each serving, recording:

every content item that was served in the serving;
a user to whom the content items were served; and
a time the content items were served.

13. A non-transitory computer-readable medium storing instructions that, when executed by a processor, cause the processor to perform a method of serving electronic content items according to any preceding claim:

receiving a request for at least one content item for presentation to a first user;
for each of a plurality of content items servable in response to the request, calculating an estimated value of the content item, from:

a bid offered for serving the content item; and

a modified probability that the first user will act on the content item if the content item is presented to the first user, wherein the modified probability reflects how many times the content item was previously presented to the first user; and

serving one or more of the plurality of content items in response to the request.

14. A computer-readable medium containing a data structure configured for indicating a modifier to apply to a probability that a given user will act on a content item upon a given ordinal presentation of the content item, the data structure comprising:

a first dimension corresponding to quantities of presentations of a set of content items that includes the content item;
a second dimension corresponding to time spans; and
for each intersection between a quantity N of presentations of a set of content items and a first time span:

a probability modifier applicable when the content item is a candidate to be presented to the given user for the $(N+1)^{th}$ time, wherein a most recent presentation of the content item to the given user occurred during the first time span;

wherein the probability modifier is read and multiplied by a predicted probability that the given user will act on the $(N+1)^{th}$ impression of the content item, to produce a modified probability.

15. A system for serving electronic content, the system comprising:

a repository of content items for serving in response to requests for content for presentation to users;
a data store comprising, for each of a plurality of users:

for each of the content items that have been served for presentation to the user:

first data identifying a number of times the content item has been served for presentation to the user;

selection logic for identifying a subset of the content items suitable for serving to a first user in response to a request for content to present to the first user; and
estimation logic for calculating, for each of the identified content items, an estimated value of the content item, wherein the estimation logic is configured to combine:

a bid offered by a provider of the content item;
a base probability that the first user will act on the content item if the content item is presented to the first user; and
a modifier reflecting a number of times the content item was previously presented to the first user.

Client Application 102

Front-End
Server 112

Profile
Server 114

Tracking
Server 116

Content
Server
118

Profile
Database 124

Tracking
Database 126

User Store 128

Content Store
130

System 110

**FIG. 1**

```
                        ┌─────────────┐
                        │    Start    │
                        └─────────────┘
                               │
                               ▼
              ┌──────────────────────────────────┐
              │  Collect data regarding serving of │◄─ ─ ─┐
              │   content items and user actions   │      │
              │               202                  │      │
              └──────────────────────────────────┘      │
                               │                          │
                               ▼                          │
              ┌──────────────────────────────────┐      │
              │ Analyze collected data to identify when │ │
              │    users acted on served content   │      │
              │               204                  │      │
              └──────────────────────────────────┘      │
                               │                          │
                               ▼                          │
              ┌──────────────────────────────────┐      │
              │   Determine probabilities and/or   │      │
              │ modifiers for determining the likelihood │─ ─ ┘
              │    a user will act on a content item │
              │               206                  │
              └──────────────────────────────────┘
                               │
                               ▼
              ┌──────────────────────────────────┐
              │   Receive content request for a user; │
              │    Identify candidate content items │
              │               208                  │
              └──────────────────────────────────┘
                               │
                               ▼
              ┌──────────────────────────────────┐
              │  Retrieve historical data regarding the │
              │      user and the candidate items  │
              │               210                  │
              └──────────────────────────────────┘
                               │
                               ▼
              ┌──────────────────────────────────┐
              │   Calculate estimated values of the │
              │         items, and rank them       │
              │               212                  │
              └──────────────────────────────────┘
                               │
                               ▼
              ┌──────────────────────────────────┐
              │ Serve the top N ranked content items; │
              │         record transaction         │
              │               214                  │
              └──────────────────────────────────┘
                               │
                               ▼
                        ┌─────────────┐
                        │     End     │
                        └─────────────┘
```

**FIG. 2**

FIG. 3A

FIG. 3B

Total
Number of
Impressions
402

Matrix 400

| Total Number of Impressions 402 | Last Hour 412 | Last Six Hours 414 | Last Day 416 | Last Three Days 418 | Last Week 420 |
|---|---|---|---|---|---|
| ⋮ | | | | | |
| 14 | 0 | 0 | 0.55 | 0.85 | 0.85 |
| 12 | 0 | 0.25 | 0.85 | 0.9 | 0.85 |
| 10 | 0.5 | 0.7 | 0.9 | 1 | 1 |
| 8 | 0.7 | 0.75 | 1 | 1 | 1 |
| 6 | 0.8 | 0.9 | 1 | 1 | 0.9 |
| 4 | 0.6 | 0.7 | 0.8 | 0.7 | 0.5 |
| 2 | 0.2 | 0.4 | 0.55 | 0.4 | 0.25 |
| 0 | 0 | 0 | 0 | 0 | 0 |

FIG. 4

Display
516

Content-Serving System 500

Processor(s)
502

Memory
504

Storage
506

Tracking Logic 522

Analysis Logic
524

Ranking Logic 526

Serving Logic 528

Keyboard
512

Pointing
Device
514

# FIG. 5

Europäisches
Patentamt

European
Patent Office

Office européen
des brevets

# EUROPEAN SEARCH REPORT

Application Number

EP 13 17 1812

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| L | EPO: "Mitteilung des Europäischen Patentamts vom 1. Oktober 2007 über Geschäftsmethoden = Notice from the European Patent Office dated 1 October 2007 concerning business methods = Communiqué de l'Office européen des brevets,en date du 1er octobre 2007, concernant les méthodes dans le domaine des activités", JOURNAL OFFICIEL DE L'OFFICE EUROPEEN DES BREVETS.OFFICIAL JOURNAL OF THE EUROPEAN PATENT OFFICE.AMTSBLATTT DES EUROPAEISCHEN PATENTAMTS, OEB, MUNCHEN, DE, vol. 30, no. 11, 1 November 2007 (2007-11-01), pages 592-593, XP007905525, ISSN: 0170-9291 * Statement in accordance with the Notice from the European Patent Office dated 1 October 2007 concerning business methods(OJ 11/2007; p592-593). The claimed-subject matter, with due regard to the description and drawings, relates to processes comprised in the list of subject-matter and activities excluded from patentability under Art.52 (2) and (3) EPC. The applicant is advised that in accordance with the established practice of the EPO, no search need be performed in respect of those aspects of the claimed invention. The only identifiable technical aspects of the claimed invention relate to the use of conventional, general-purpose data processing technology for processing data of an inherently non-technical nature. The information technology employed is considered to have been generally known as it was widely available to everyone at the date of filing/priority of the present | 1-15 | INV. G06Q30/02 |

TECHNICAL FIELDS SEARCHED (IPC)

G06Q

The present search report has been drawn up for all claims

| Place of search | Date of completion of the search | Examiner |
|---|---|---|
| The Hague | 6 February 2014 | Moltenbrey, Michael |

CATEGORY OF CITED DOCUMENTS

X : particularly relevant if taken alone
Y : particularly relevant if combined with another
      document of the same category
A : technological background
O : non-written disclosure
P : intermediate document

T : theory or principle underlying the invention
E : earlier patent document, but published on, or
      after the filing date
D : document cited in the application
L : document cited for other reasons
..............................................................................................
& : member of the same patent family, corresponding
      document

EPO FORM 1503 03.82 (P04C01)

Europäisches
Patentamt

European
Patent Office

Office européen
des brevets

**EUROPEAN SEARCH REPORT**

Application Number

EP 13 17 1812

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| | application. The notoriety of such prior art cannot reasonably be contested. No documentary evidence was therefore considered required. *<br>----- | | |
| | | | **TECHNICAL FIELDS SEARCHED (IPC)** |

The present search report has been drawn up for all claims

| Place of search | Date of completion of the search | Examiner |
|---|---|---|
| The Hague | 6 February 2014 | Moltenbrey, Michael |

EPO FORM 1503 03.82 (P04C01)

**EP 2 743 876 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 705115 A